(19) Europäisches Patentamt
European Patent Office
Office européen des brevets

(11) **EP 1 209 912 A1**

(12) **EUROPEAN PATENT APPLICATION**

(43) Date of publication:
**29.05.2002 Bulletin 2002/22**

(51) Int Cl.⁷: **H04N 7/035**, H04N 7/088, H04L 7/00

(21) Application number: **01111947.6**

(22) Date of filing: **18.05.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **22.11.2000 JP 2000355752**<br><br>(71) Applicants:<br>• **MITSUBISHI DENKI KABUSHIKI KAISHA Tokyo 100-8310 (JP)** | • **MITSUBISHI ELECTRIC SYSTEM LSI DESIGN CORPORATION Itami-shi, Hyogo 664-0851 (JP)**<br><br>(72) Inventor: **Matsumoto, Seiji, Mitsubishi Electric System Itami-shi, Hyogo 664-0851 (JP)**<br><br>(74) Representative: **Popp, Eugen, Dr. et al MEISSNER, BOLTE & PARTNER Widenmayerstrasse 48 80538 München (DE)** |

(54) **Slicing circuit**

(57)     The slicing circuit is provided with a data bus (8), a control register (1), a text RAM (2), a digital arithmetic and logic unit (3), a timing control circuit (4), an A/D converter (5), a SYNC separator (6), and a PLL circuit (7).

FIG.1

EP 1 209 912 A1

**Description**

FIELD OF THE INVENTION

The present invention in general relates to a slicing circuit. More particularly, this invention relates to a slicing circuit which extracts character broadcasting data that is superimposed on a composite video signal after having been demodulated by a receiver.

BACKGROUND OF THE INVENTION

Conventionally, character broadcasting services that provide information by characters and graphics on a TV screen have been available. There are a variety of such services based on different standards of transmission. ADAMS is mainly popular in Japan, CCD is popular in America, and TELETEXT is popular in Europe and South East Asia.
When character broadcasting information is transmitted together with video information from a broadcasting station by superimposing the character broadcasting information onto a retrace line section of a video signal, a receiver slices the character broadcasting data included in the video signal, decodes the character broadcasting data, and expands the decoded result on a TV screen.

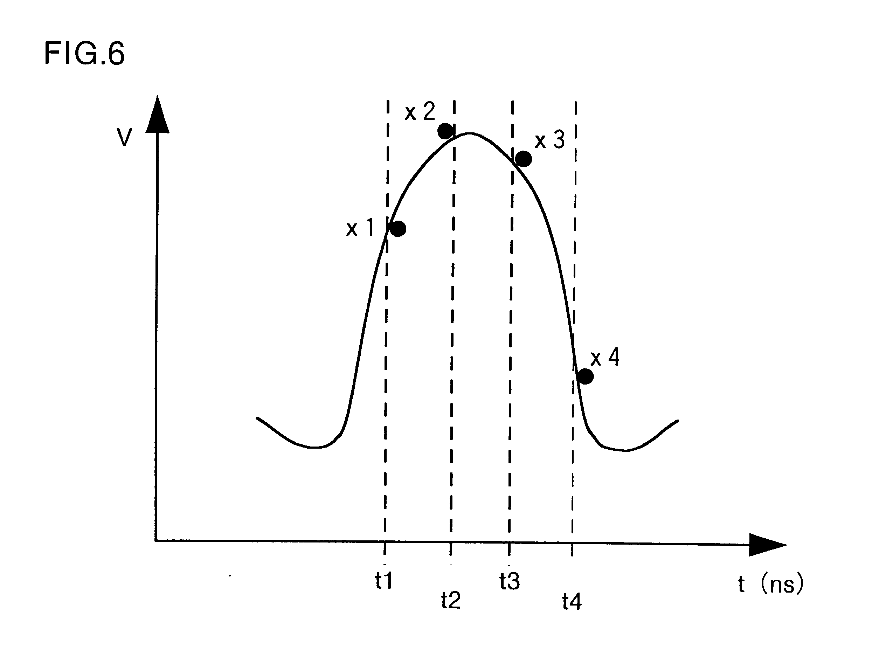

Fig. 6 shows a sampling of a composite video signal when extracting the character broadcasting data. An example of a sampling in a data one-bit width is shown. Referring to Fig. 6, t1 to t4 are timings of a sampling respectively (hereinafter to be referred to as a sampling timing), and sampling values at these timings become x1 to x4.

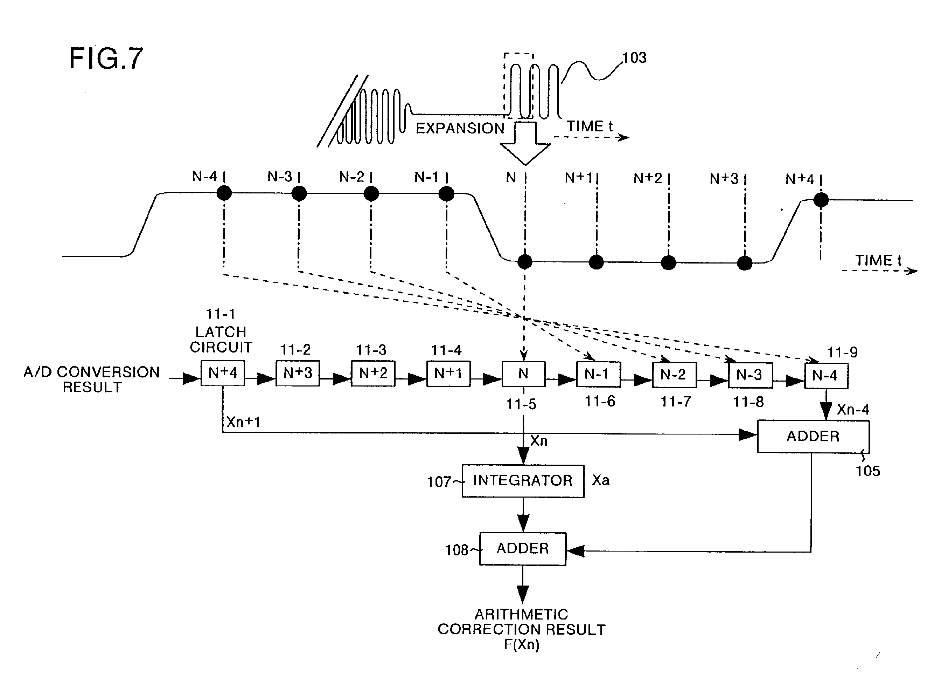

Fig. 7 is a diagram showing a state of arithmetically correcting character broadcasting data extracted from a composite video signal by a conventional arithmetic and logic unit. As shown here, the conventional arithmetic and logic unit 1000 is provided with latch circuits 11-1 to 11-9, adders 105 and 108, and an integrator 107.
To begin with, the composite video signal 103 is converted into digital values for sampling points N-4 to N-1 at respective timings in one-bit width, by an A/D converter (not shown).
In the following one bit, N to N+3 become sampling points. N+4 becomes a sampling point at the next one bit. A sampling operation is repeated continuously in this way.
Further, result of A/D conversion is stored sequentially in the latch circuits 11-1 to 11-9. For example, when the sampling point N-4 is stored in the latch circuit 11-9, the sampling point N-3 is stored in the latch circuit 11-8.
Similarly, the sampling point N-2 is stored in the latch circuit 11-7, the sampling point N-1 is stored in the latch circuit 11-6, and the sampling point N is stored in the latch circuit 11-5.
Also, the sampling point N+1 is stored in the latch circuit 11-4, the sampling point N+2 is stored in the latch circuit 11-3, the sampling point N+3 is stored in the latch circuit 11-2, and the sampling point N+4 is stored in the latch circuit 11-1.
The latching of the sampling values at the above sampling points is carried out as follows. When a value ("0" or "1") of the sampling point N is obtained, a sampling value Xn latched by the latch circuit 11-5 is not used directly, but sampling values Xn+4 and Xn-4 latched at the sampling points before and after this point are used to carry out a correction.
Further, a value F (Xn) of the sampling point is obtained by the following expression.

$$F\ (Xn)\ =\ a\ (Xn)\ +\ b\ (Xn-4)\ +\ c\ (Xn+4)\ +\ d$$

$$=\ a\ (Xn)\ -\ (Xn-4)\ -\ (Xn+4)$$

where, a = 5, b = c = -1, and d = 0.
Further, the magnitude of the value F (Xn) of the sampling point after the correction is compared with the magnutude of a preset slice value (hereinafter to be referred to as a slice level), and the value of the sampling point is changed to a value of "0" or "1".

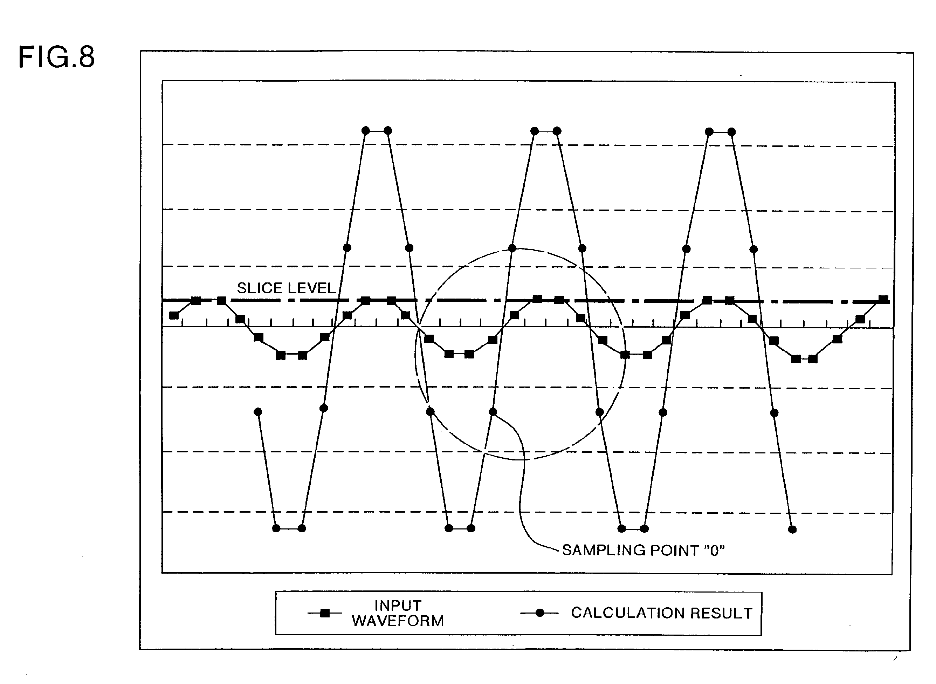

Fig. 8 is a diagram showing a result of an arithmetic processing by the conventional arithmetic and logic unit. Referring to Fig. 8, an arithmetic correction expression when a sinusoidal wave has been input to the arithmetic and logic unit 1000 is expressed by the following.

$$F\ (Xn) = 5\ (Xn) - (Xn-4) - (Xn+4)$$

The value of each sampling point is judged as "0" or "1" based on the comparison with the slice level. For example, the value of the sampling point in Fig. 8 is smaller than the slice level. Therefore, a result of the arithmetic processing is judged as "0".

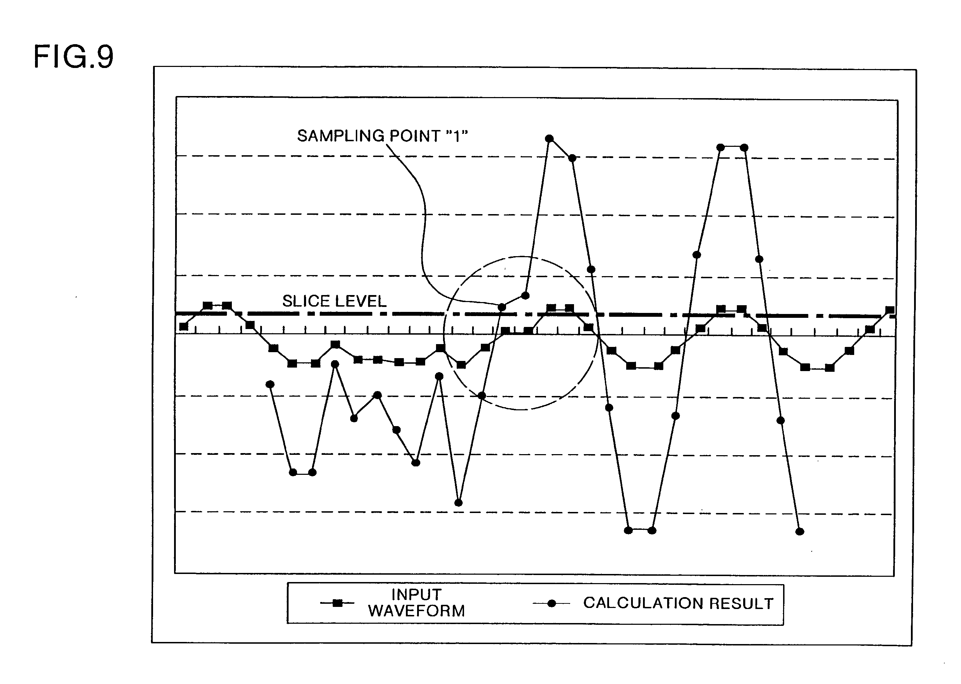

Fig. 9 is a diagram showing a result of an arithmetic processing when a distortion occurred in the input waveform by the conventional arithmetic and logic unit. Adistortion of the input waveform occurs when the reception status is aggravated by a weak electric field or a ghost. Referring to Fig. 9, the value of the sampling point that has been judged as "0" in Fig. 8 is judged as "1" as a result of a correction processing, as the value becomes larger than the slice level.

According to the slicing circuit provided with the conventional arithmetic and logic unit, the sampling data is distorted. Therefore, there arises such a situation that a result of an arithmetic processing that should actually be decided as "0" is erroneously decided as "1". This has resulted in a cause of an erroneous operation.

## SUMMARY OF THE INVENTION

The slicing circuit according to one aspect of this invention is provided with a control recording unit which exchanges data with a data bus, a memory which temporarily stores character broadcasting data extracted from the data bus, and an A/D converter which receives an input of a composite video signal, and converts the composite signal into digital values.

Further, the slicing circuit is providedwith a digital arithmetic and logic unit which receives the digital values converted by the A/D converter, calculates character broadcasting data, and outputs the character broadcasting data to the memory, and a SYNC separator which receives the composite video signal, and extracts a vertical or horizontal synchronizing signal.

Further, the slicing circuit is provided with clock generating unit, and a timing control circuit which receives the output of the SYNC separator, clock generating unit and control recording unit, output to the memory and digital arithmetic and logic unit, and controls a timing.

In one configuration, the digital arithmetic and logic unit is preferably provided with a plurality of latch circuits, and an arithmetic processing control circuit which receives a sampling clock and a slicing clock, and outputs a first through fourth control signals that show a timing in a one-bit data width.

Further, the digital arithmetic and logic unit is provided with a first integrator connected to one of the plurality of latch circuits, which first integrator receives the second control signal, and a second integrator connected to a latch circuit, to which the first integrator is not connected, out of the plurality of latch circuits, which second integrator receives the third control signal.

Further, the digital arithmetic and logic unit is provided with a first adder which receives the output of the first and second integrators, and a third integrator connected to a latch circuit, to which the first and second integrators are not connected, out of the plurality of latch circuits, which third integrator receives the first control signal.

Further, the digital arithmetic and logic unit is provided with a second adder which receives the output of the third and first adders, and a correcting circuit which receives the output of the second adder and the fourth control signal. These units or circuits are provided in addition to the configuration of the slicing circuit according to the first aspect.

In another configuration, the digital arithmetic and logic unit is preferably provided with a plurality of latch circuits, and an arithmetic processing control circuit which receives a sampling clock and a slicing clock, and outputs a first through fourth control signals that show a timing in a one-bit data width.

Further, the digital arithmetic and logic unit is provided with a first selector connected to at least two latch circuits out of the plurality of latch circuits, which first selector receives the first control signal, a second selector connected to at least two latch circuits, to which the first selector is not connected, out of the plurality of latch circuits, which second selector receives the second control signal.

Further, the digital arithmetic and logic unit is provided with a first adder which receives the output of the first and second selectors, an integrator connected to at least two latch circuits, to which the first and second selectors are not connected, out of the plurality of latch circuits, a second adder which receives the output of the integrator and first adder, and a correcting circuit which receives the output of the second adder. These units or circuits are provided in addition to the configuration of the slicing circuit according to the first aspect.

The slicing circuit, for arithmetically correcting character broadcasting data extracted from a composite video signal according to second aspect of this invention, is provided with an arithmetic processing unit which changes over an arithmetic processing at a sampling timing of the composite video signal.

Other objects and features of this invention will become apparent from the following description with reference to the accompanying drawings.

BRIEF DESCRIPTION OF THE DRAWINGS

Fig. 1 is a block diagramof a slicing circuit according to a first embodiment.

Fig. 2 is a block diagram of a digital arithmetic and logic unit provided in the slicing circuit according to the first embodiment.

Fig. 3 is a diagram showing a result of an arithmetic processing when a distortion occurred in the input waveform by a digital arithmetic and logic unit in the slicing circuit according to the first embodiment.

Fig. 4 is a block diagram of a digital arithmetic and logic unit provided in a slicing circuit according to a second embodiment.

Fig. 5 is a diagram showing a result of an arithmetic processing when a distortion occurred in the input waveform by a digital arithmetic and logic unit in the slicing circuit according to the second embodiment.

Fig. 6 is a diagram showing a sampling example in a data one-bit width for explaining a conventional arithmetic and logic unit.

Fig. 7 is a diagram showing a state of arithmetically correcting character broadcasting data extracted from a composite video signal by a conventional arithmetic and logic unit.

Fig. 8 is a diagram showing a result of an arithmetic processing by the conventional arithmetic and logic unit.

Fig. 9 is a diagram showing a result of an arithmetic processing when a distortion occurred in the input waveform by the conventional arithmetic and logic unit.

DESCRIPTION OF THE PREFERRED EMBODIMENTS

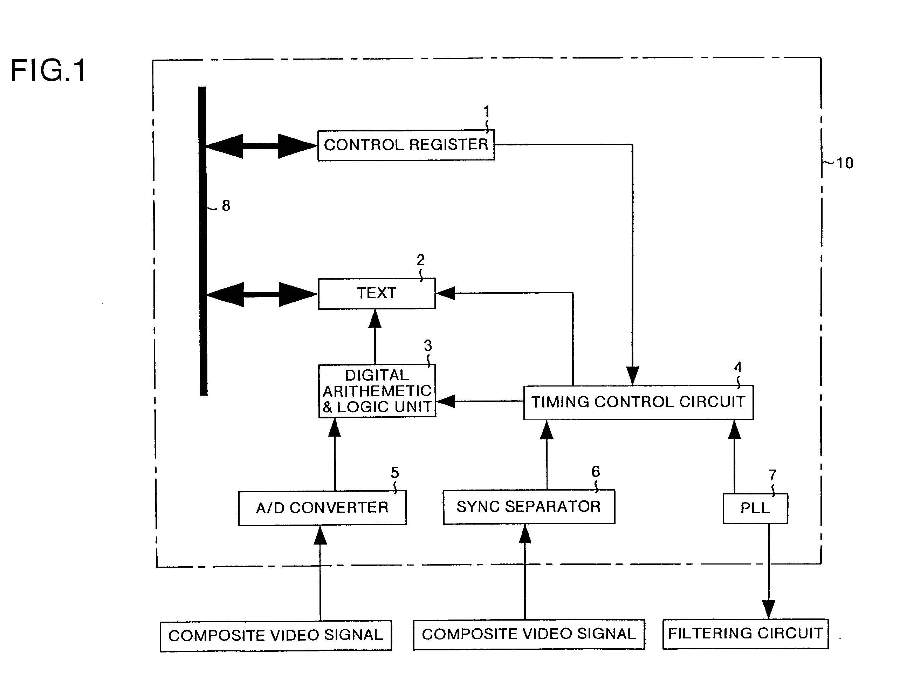

A slicing circuit according to a first embodiment of this invention is shown in Fig. 1. This slicing circuit 10 is provided with a control register 1 which exchanges data with a data bus 8, and controls the overall functioning of the slicing circuit 10. Further, there is provided a text RAM 2 which temporarily stores character broadcasting data (hereinafter to be referred to as text data) extracted from the data bus 8.

An A/D converter 5 receives a composite video signal, converts the composite video signal into digital values. Furthermore, a digital arithmetic and logic unit 3 receives the digital values from the A/D converter 5, calculate text data, and outputs the text data to the text RAM 2.

A SYNC separator 6 receives the composite video signal, extracts a vertical or horizontal synchronizing signal (hereinafter to be referred to as a SYNC). Furthermore, a PLL (Phase Locked Loop) circuit 7 is provided.

A timing control circuit 4 receives the output of the SYNC separator 6, PLL circuit 7 and the control register 1. The timing control circuit 4 makes an output to the text RAM 2 and the digital arithmetic and logic unit 3. The timing control circuit 4 controls a timing of the slicing circuit as a whole.

Thus, the slicing circuit 10 receives the composite video signal superimposed with text data through the A/D converter 5 and the SYNC separator 6. The SYNC separator 6 separates and generates a vertical or horizontal synchronizing signal.

The A/D converter 5 samples the composite video signal.

The PLL circuit 7 locks using a generated horizontal synchronizing signal as a reference clock. The PLL circuit 7 generates a clock for the slicing circuit 10 (hereinafter to be referred to as a VCO clock).

Further, the slicing circuit 10 controls the timing control circuit 4 based on a vertical synchronizing signal, a horizontal synchronizing signal and a VCO clock.

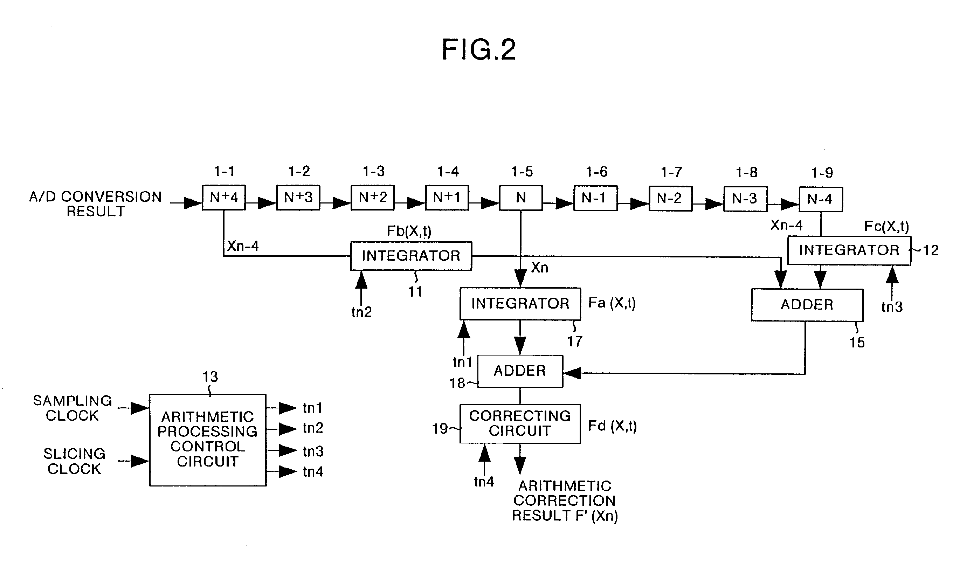

A detail configuration of a digital arithmetic and logic unit provided in the slicing circuit according to the first embodiment is shown in Fig. 2. This digital arithmetic and logic unit 3 is provided with latch circuits 1-1 to 1-9.

An arithmetic processing control circuit 13 receives a sampling clock and a slicing clock, and outputs control signals (tn1 to tn4) that show at what timing (center, right, or left) in one-bit data width a sampling point is. An integrator 11 is connected to the latch circuit 1-1, and it receives the output of the control signal tn2.

An integrator 12 is connected to the latch circuit 1-9, and it receives the control signal tn3. An adder 15 receives the output of the integrators 11 and 12.

An integrator 17 is connected to the latch circuit 1-5, and it receives the control signal tn1. An adder 18 receives the outputs of the integrator 17 and adder 15. A correcting circuit 19 receives the output of the adder 18, and the control signal tn4.

The digital arithmetic and logic unit 3 operates as follows. The A/D converter 5 converts the composite video signal into digital values for sampling points N-4 to N-1 at respective timings in one-bit width.

In the following one bit, N to N+3 become sampling points. N+4 becomes a sampling point at the next one bit. A sampling operation is repeated continuously in this way.

The result of the A/D conversion is stored sequentially in the latch circuits 1-1 to 1-9. For example, when the sampling point N-4 is stored in the latch circuit 1-9, the sampling point N-3 is stored in the latch circuit 1-8.

Similarly, the sampling point N-2 is stored in the latch circuit 1-7, the sampling point N-1 is stored in the latch circuit 1-6, and the sampling point N is stored in the latch circuit 1-5.

Also, the sampling point N+1 is stored in the latch circuit 1-4, the sampling point N+2 is stored in the latch circuit 1-3, the sampling point N+3 is stored in the latch circuit 1-2, and the sampling point N+4 is stored in the latch circuit 1-1.

When the control signal tn1 has been input, the integrator 17 carries out the following changeover of the arithmetic processing.

$$Fa\ (X, t) = 5\ (Xn)\ \text{(when the control signal tn1 = 1)}$$

$$Fa\ (X, t) = 3\ (Xn)\ \text{(when the control signal tn1 = 0)}$$

The change over between these two arithmetic operations is carried out at four sampling timings in the one-bit data width.

A weight is placed in general near the center of the data (t2 in Fig. 6, hereinafter to be referred to as a sampling timing t2). Therefore, the arithmetic processing control circuit 13 outputs the control signal tn1 so that the control signal tn1 = 1 at this point, and the control signal tn1 = 0 at other points.

In this case, the arithmetic processing becomes as follows.

$$Fa\ (X, t) = 5\ (Xn)\ \text{(when the sampling timing is t2)}$$

$$Fa\ (X, t) = 3\ (Xn)\ \text{(when the sampling timing is}$$

$$\text{other than t2)}$$

Further, the integrator 11 is input with the control signal tn2, the integrator 12 is input with the control signal tn3, and the correcting circuit 19 is input with the control signal tn4. These can similarly change over their respective arithmetic expressions Fb (X, t), Fc (X, t), and Fd (X, t).

By combining the above arithmetic expressions, it becomes possible to correct the sampling values Xn based on sampling timings.

The arithmetic expressions Fb (X, t), Fc (X, t), and Fd (X, t) carry out the following controls based on the control signal tn2.

$$Fa\ (X, t) = 5\ (Xn)\ \text{(when the sampling timing is t2)}$$

$$Fa\ (X, t) = 5\ (Xn)\ \text{(when the sampling timing is other than t2)}$$

Further, the following relationship is obtained.

$$Fb\ (X, t) = -1\ (Xn+4)\ \text{(when the sampling timing is}$$

$$t2)$$

$$Fb\ (X, t) = 0\ (Xn+4) = 0\ \text{(when the sampling timing}$$

$$\text{is other than t2)}$$

Further, the following relationship is obtained.

$$Fc\ (X, t) = -1\ (Xn-4)\ \text{(when the sampling timing is}$$

$$t2)$$

$$Fc\ (X, t) = 0\ (Xn-4) = 0\ \text{(when the sampling timing}$$

$$\text{is other than t2)}$$

Further, the following relationship is obtained.

$$Fd\ (X, t) = 0\ \text{(when the sampling timing is t2)}$$

$$Fd\ (X, t) = 0\ \text{(when the sampling timing is other than}$$

$$t2)$$

Further, the arithmetic correction expression is given as follows.

$$F'\ (X, t) = 5\ (Xn) - (Xn+4) - (Xn-4)\ \text{(when the sampling}$$

$$\text{timing is t2)}$$

$$F'\ (X, t) = 5\ (Xn)\ \text{(when the sampling timing is other}$$

$$\text{than t2)}$$

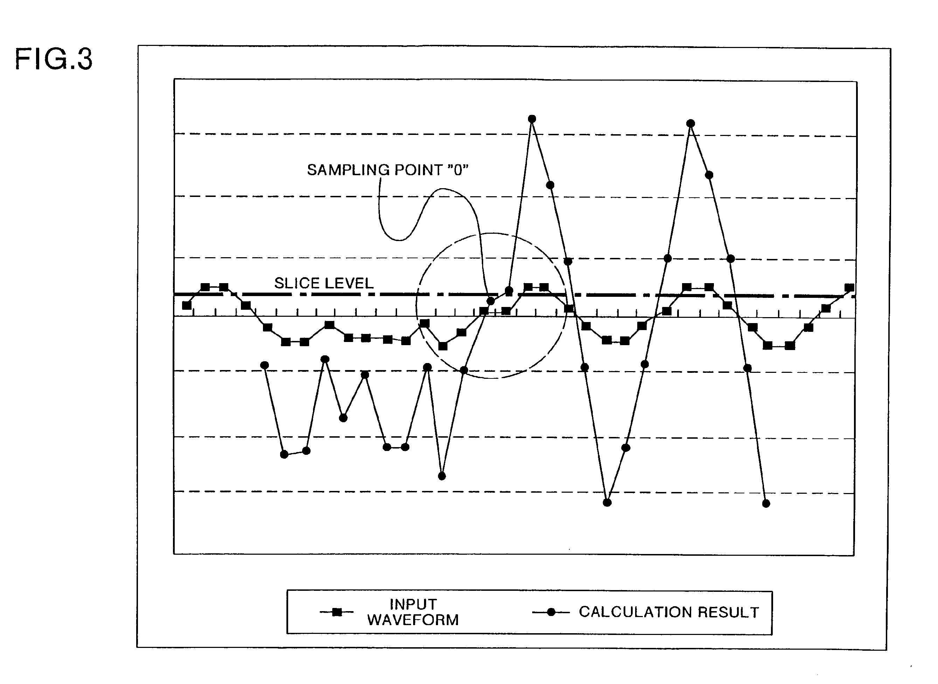

Fig. 3 is a diagram showing a result of an arithmetic processing when a distortion occurred in the input waveform by a digital arithmetic and logic unit in the slicing circuit according to the first embodiment. Referring to Fig. 3, even when a distortion has occurred in the input waveform, a result of this arithmetic processing is judged as "0", as the value of the sampling point is smaller than the slice level. Thus, the value has been corrected to a normal decision result.

While the above arithmetic processing expressions are changed over in two ways based on the sampling points, it is needless to mention that it is also possible to change over the arithmetic expressions in many ways other than this.

According to the first embodiment, such an erroneous decision does not occur that an arithmetic processing result that should be judged as "0" is misjudged as "1".

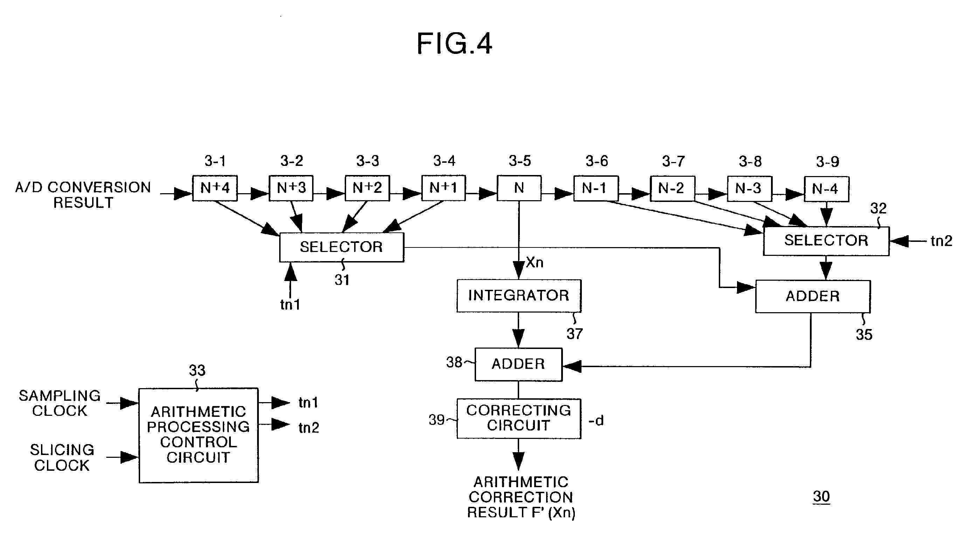

A digital arithmetic and logic unit provided in a slicing circuit according to a second embodiment is shown in Fig. 4. The digital arithmetic and logic unit 30 is provided with latch circuits 3-1 to 3-9.

An arithmetic processing control circuit 33 receives a sampling clock and a slicing clock, and outputs control signals tn1 and tn2 that show at what timing (center, right, or left) in one-bit data width a sampling point is. A selector 31 is connected to the latch circuits 3-1 to 3-4, and it receives the control signal tn1.

A selector 32 is connected to the latch circuits 3-6 to 3-9, and it receives the control signal tn2. An adder 35 receives the output of the selectors 31 and 32.

An integrator 37 is connected to the latch circuit 3-5. An adder 38 receives the outputs of the integrator 37 and adder 35. A correcting circuit 39 receives the output of the adder 38.

Further, the operation of the digital arithmetic and logic unit 30 is as follows. The A/D converter (not shown) converts the composite video signal into digital values for sampling points N-4 to N-1 at respective timings in one-bit width.

In the following one bit, N to N+4 become sampling points. A sampling operation is repeated continuously in this way.

The result of A/D conversion is stored sequentially in the latch circuits 3-1 to 3-9. For example, when the sampling point N-4 is stored in the latch circuit 3-9, the sampling point N-3 is stored in the latch circuit 3-8.

Similarly, the sampling point N-2 is stored in the latch circuit 3-7, the sampling point N-1 is stored in the latch circuit 3-6, and the sampling point N is stored in the latch circuit 3-5.

Also, the sampling point N+1 is stored in the latch circuit 3-4, the sampling point N+2 is stored in the latch circuit 3-3, the sampling point N+3 is stored in the latch circuit 3-2, and the sampling point N+4 is stored in the latch circuit 3-1.

When the control signal tn1 has been input, the selector 31 selects one of the sampling points N+4 to N+1.

When the control signal tn2 has been input, the selector 32 selects one of the sampling points N-1 to N-4.

The selectors 31 and 32 are set in advance to a register (not shown) to carry out the following changeover.

Selector 31: Selects N-4 (when the control signal tn1 = 1)

Selects N-1 (when the control signal tn1 = 0)

Selector 32: Selects N+4 (when the control signal tn2 = 1)

Selects N+1 (when the control signal tn2 = 0)

When the arithmetic processing control circuit 33 sets the control signals tn1 and tn2 to "1" respectively at the sampling timing t2, the arithmetic correction expression becomes as follows.

$$F''(X, t) = a(Xn) + b(Xn+4) + c(Xn-4) + d \text{ (when the sampling timing is t2)}$$

$$F''(X, t) = a(Xn) + b(Xn+1) + c(Xn-1) + d \text{ (when the sampling timing is other than t2)}$$

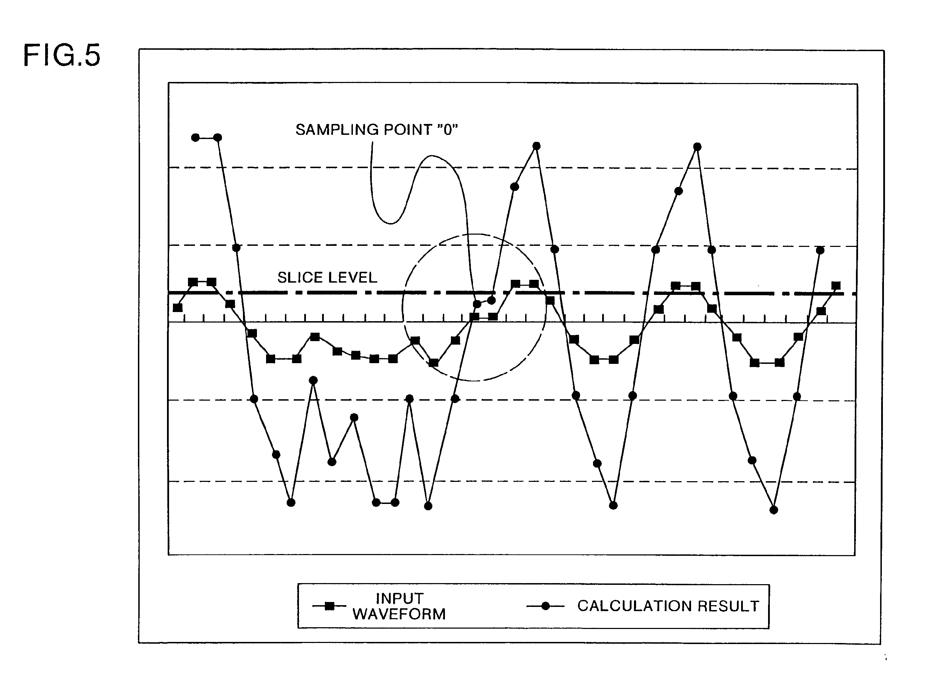

Fig. 5 is a diagram showing a result of an arithmetic processing when a distortion occurred in the input waveform by a digital arithmetic and logic unit in the slicing circuit according to the second embodiment. Referring to Fig. 5, the arithmetic correction expression of this input wave becomes as follows.

$$F''(X, t) = 5(Xn) - (Xn+4) - (Xn-4) \text{ (when the sampling}$$

$$\text{timing is t2)}$$

$$F''(X, t) = 5(Xn) - (Xn+1) - (Xn-1) \text{ (when the sampling}$$

$$\text{timing is other than t2)}$$

In other words, even when a distortion has occurred in the input waveform, a result of this arithmetic processing is judged as "0", as the value of the sampling point is smaller than the slice level. Thus, the value has been corrected to a normal decision result.

While the above arithmetic processing expressions are changed over in two ways based on the sampling points, it is needless to mention that it is also possible to change over the arithmetic expressions in many ways other than this .

According to the second embodiment, further such an erroneous decision does not occur that an arithmetic processing result that should be judged as "0" is misjudged as "1".

The slicing circuit according to first aspect of this invention is provided with a control recording unit which exchanges data with a data bus, a memory which temporarily stores character broadcasting data extracted from the data bus, and an A/D converter which receives an input of a composite video signal, and converts the composite signal into digital values.

Further, the slicing circuit is provided with a digital arithmetic and logic unit which receives the digital values converted by the A/D converter, calculates character broadcasting data, and outputs the character broadcasting data to the memory, and a SYNC separator which receives the composite video signal, and extracts a vertical or horizontal synchronizing signal.

Further, the slicing circuit is provided with clock generating unit, and a timing control circuit which receives the output of the SYNC separator, clock generating unit and control recording unit, output to the memory and digital arithmetic and logic unit, and controls a timing. Therefore, it is possible to process the arithmetic processing result securely and promptly.

Further, the digital arithmetic and logic unit is provided with a plurality of latch circuits, and an arithmetic processing control circuit which receives a sampling clock and a slicing clock, and outputs a first through fourth control signals that show a timing in a one-bit data width.

Further, the digital arithmetic and logic unit is provided with a first integrator connected to one of the plurality of latch circuits, which first integrator receives the second control signal, and a second integrator connected to a latch circuit, to which the first integrator is not connected, out of the plurality of latch circuits, which second integrator receives the third control signal.

Further, the digital arithmetic and logic unit is provided with a first adder which receives the output of the first and second integrators, and a third integrator connected to a latch circuit, to which the first and second integrators are not connected, out of the plurality of latch circuits, which third integrator receives the first control signal.

Further, the digital arithmetic and logic unit is provided with a second adder which receives the output of the third and first adders, and a correcting circuit which receives the output of the second adder and the fourth control signal. These units or circuits are provided in addition to the configuration of the slicing circuit according to the first aspect. Therefore, it is possible to prevent such an erroneous decision that an arithmetic processing result that should be judged as "0" is misjudged as "1".

Further, the digital arithmetic and logic unit is provided with a plurality of latch circuits, and an arithmetic processing control circuit which receives a sampling clock and a slicing clock, and outputs a first through fourth control signals that show a timing in a one-bit data width.

Further, the digital arithmetic and logic unit is provided with a first selector connected to at least two latch circuits out of the plurality of latch circuits, which first selector receives the first control signal, a second selector connected to at least two latch circuits, to which the first selector is not connected, out of the plurality of latch circuits, which second selector receives the second control signal.

Further, the digital arithmetic and logic unit is provided with a first adder which receives the output of the first and second selectors, an integrator connected to at least two latch circuits, to which the first and second selectors are not connected, out of the plurality of latch circuits, a second adder which receives the output of the integrator and first adder, and a correcting circuit which receives the output of the second adder. These units or circuits are provided in addition to the configuration of the slicing circuit according to the first aspect. Therefore, it is further possible to prevent such an erroneous decision that an arithmetic processing result that should be judged as "0" is misjudged as "1".

The slicing circuit, for arithmetically correcting character broadcasting data extracted from a composite video signal according to second aspect of this invention, is provided with an arithmetic processing unit which changes over an arithmetic processing at a sampling timing of the composite video signal.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

**Claims**

1. A slicing circuit comprising:

   a control recording unit (1) which exchanges data with a data bus (8);
   a memory (2) which temporarily stores character broadcasting data extracted from the data bus (8);
   an A/D converter (5) which receives a composite video signal, and converts the composite signal into digital values;
   a digital arithmetic and logic unit (3) which receives the digital values converted by the A/D converter (5), calculates character broadcasting data, and outputs the character broadcasting data to the memory (2);
   a SYNC separator (6) which receives the composite video signal, and extracts a vertical or horizontal synchronizing signal;
   a clock generating unit (7); and
   a timing control circuit (4) which receives the output of the SYNC separator (6), clock generating unit (7) and control recording unit (1), output to the memory (2) and digital arithmetic and logic unit (3), and controls a timing.

2. The slicing circuit according to claim 1, wherein the digital arithmetic and logic unit (3) includes,

   a plurality of latch circuits (1-1 to 1-9);
   an arithmetic processing control circuit (13) which receives a sampling clock and a slicing clock, and outputs a first through fourth control signals that show a timing in a one-bit data width;
   a first integrator (11) connected to one (1-1) of the plurality of latch circuits (1-1 to 1-9), which first integrator (11) receives the second control signal;
   a second integrator (12) connected to a latch circuit (1-9), to which the first integrator (11) is not connected, out of the plurality of latch circuits (1-1 to 1-9), which second integrator (12) receives the third control signal;

a first adder (15) which receives the output of the first and second integrators (11, 12);
a third integrator (17) connected to a latch circuit (1-5), to which the first and second integrators (11, 12) are not connected, out of the plurality of latch circuits (1-1 to 1-9), which third integrator (17) receives the first control signal;
a second adder (18) which receives the output of the third and first adders (15, 18); and
a correcting circuit (19) which receives the output of the second adder (18) and the fourth control signal.

3. The slicing circuit according to claim 1, wherein the digital arithmetic and logic unit (3) includes,

a plurality of latch circuits (3-1 to 3-9);
an arithmetic processing control circuit (33) which receives a sampling clock and a slicing clock, and outputs a first through fourth control signals that show a timing in a one-bit data width;
a first selector (31) connected to at least two latch circuits (3-1, 3-2, 3-3, 3-4) out of the plurality of latch circuits (3-1 to 3-9), which first selector (31) receives the first control signal;
a second selector (32) connected to at least two latch circuits (3-6, 3-7, 3-8, 3-9), to which the first selector (31) is not connected, out of the plurality of latch circuits (3-1 to 3-9), which second selector (32) receives the second control signal;
a first adder (35) which receives the output of the first and second selectors (31, 32);
an integrator (37) connected to a latch circuit (3-5), to which the first and second selectors (31, 32) are not connected, out of the plurality of latch circuits (3-1 to 3-9);
a second adder (38) which receives the output of the integrator (37) and first adder (35); and
a correcting circuit (39) which receives the output of the second adder (38).

4. A slicing circuit for arithmetically correcting character broadcasting data extracted from a composite video signal, the slicing circuit comprising:

an arithmetic processing unit which changes over an arithmetic processing at a sampling timing of the composite video signal.

# FIG.1

EP 1 209 912 A1

# FIG.2

A/D CONVERSION RESULT

| 1-1 | 1-2 | 1-3 | 1-4 | 1-5 | 1-6 | 1-7 | 1-8 | 1-9 |
|-----|-----|-----|-----|-----|-----|-----|-----|-----|
| N+4 | N+3 | N+2 | N+1 | N | N-1 | N-2 | N-3 | N-4 |

$X_{n-4}$

$F_b(X,t)$

INTEGRATOR

tn2

11

$X_n$

INTEGRATOR   $F_a(X,t)$

tn1

17

$X_{n-4}$

$F_c(X,t)$

INTEGRATOR   12

ADDER

tn3

15

ADDER

18

CORRECTING CIRCUIT   $F_d(X,t)$

19

tn4

ARITHMETIC CORRECTION RESULT $F'(X_n)$

SAMPLING CLOCK

SLICING CLOCK

13

ARITHMETIC PROCESSING CONTROL CIRCUIT

tn1
tn2
tn3
tn4

EP 1 209 912 A1

FIG.3

SAMPLING POINT "0"

SLICE LEVEL

INPUT
WAVEFORM

CALCULATION RESULT

# FIG.4

ARITHMETIC CORRECTION RESULT F' (Xn)

EP 1 209 912 A1

## FIG.5

SAMPLING POINT "0"

SLICE LEVEL

| INPUT WAVEFORM | CALCULATION RESULT |

EP 1 209 912 A1

FIG.6

EP 1 209 912 A1

EP 1 209 912 A1

# FIG.7

103

EXPANSION   TIME t

N-4    N-3    N-2    N-1    N    N+1    N+2    N+3    N+4

TIME t

11-1
LATCH
CIRCUIT

A/D CONVERSION
RESULT

| N+4 | N+3 | N+2 | N+1 | N | N-1 | N-2 | N-3 | N-4 |

11-2    11-3    11-4    11-5    11-6    11-7    11-8    11-9

$X_{n+1}$    $X_n$    $X_{n-4}$

ADDER

105

107 — INTEGRATOR   $X_a$

108 — ADDER

ARITHMETIC
CORRECTION RESULT
$F(X_n)$

# FIG.8

SLICE LEVEL

SAMPLING POINT "0"

| ■ | INPUT WAVEFORM | ● | CALCULATION RESULT |

EP 1 209 912 A1

FIG.9

# EP 1 209 912 A1

**European Patent Office**

## EUROPEAN SEARCH REPORT

Application Number

EP 01 11 1947

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 218 437 A (SIEBEN ULRICH) 8 June 1993 (1993-06-08) * abstract * * column 1, line 15 - column 1, line 68 * * column 3, line 15 - column 4, line 15 * | 1,4 | H04N7/035 H04N7/088 H04L7/00 |
| X | WO 98 51069 A (GAUDREAU JEAN ETIENNE ;WAVEPHORE INC (US)) 12 November 1998 (1998-11-12) * abstract; figure 5 * * page 4, line 14 - page 5, line 3 * * page 18, line 15 - page 18, line 28 * * page 20, line 12 - page 21, line 2 * | 1,4 | |
| E | EP 1 104 191 A (PHILIPS CORP INTELLECTUAL PTY ;KONINKL PHILIPS ELECTRONICS NV (NL)) 30 May 2001 (2001-05-30) * abstract; figure 1 * * column 1, line 21 - column 2, line 22 * | 1-4 | |
| A | OBARA M ET AL: "A DIGITAL TIME DOMAIN EQUALIZER FOR TELETEXT" IEEE TRANSACTIONS ON CONSUMER ELECTRONICS, IEEE INC. NEW YORK, US, vol. CE-28, no. 3, August 1982 (1982-08), pages 447-454, XP000760781 ISSN: 0098-3063 * page 448, right-hand column, line 3 - page 449, left-hand column, line 4 * | 1-4 | **TECHNICAL FIELDS SEARCHED (Int.Cl.7)** H04N H04L |
| A | US 6 067 122 A (CAHILL III BENJAMIN M) 23 May 2000 (2000-05-23) * abstract; figure 3A * * column 1, line 39 - column 1, line 46 * * column 6, line 27 - column 6, line 44 * | 1-4 | |

The present search report has been drawn up for all claims

| Place of search | Date of completion of the search | Examiner |
|---|---|---|
| MUNICH | 20 March 2002 | Schoeyer, M |

EP 1 209 912 A1

## ANNEX TO THE EUROPEAN SEARCH REPORT
## ON EUROPEAN PATENT APPLICATION NO.

EP 01 11 1947

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2002

| Patent document cited in search report | | | Publication date | Patent family member(s) | | Publication date |
|---|---|---|---|---|---|---|
| US 5218437 | A | | 08-06-1993 | EP | 0472756 A1 | 04-03-1992 |
| | | | | DE | 59009539 D1 | 21-09-1995 |
| | | | | KR | 168676 B1 | 20-03-1999 |
| WO 9851069 | A | | 12-11-1998 | US | 6239843 B1 | 29-05-2001 |
| | | | | AU | 7369698 A | 27-11-1998 |
| | | | | EP | 1008261 A2 | 14-06-2000 |
| | | | | JP | 2001524292 T | 27-11-2001 |
| | | | | WO | 9851069 A2 | 12-11-1998 |
| EP 1104191 | A | | 30-05-2001 | DE | 19956947 A1 | 31-05-2001 |
| | | | | EP | 1104191 A2 | 30-05-2001 |
| | | | | JP | 2001218174 A | 10-08-2001 |
| US 6067122 | A | | 23-05-2000 | AU | 2999799 A | 08-11-1999 |
| | | | | CN | 1307778 T | 08-08-2001 |
| | | | | EP | 1078512 A1 | 28-02-2001 |
| | | | | WO | 9955079 A1 | 28-10-1999 |

EPO FORM P0459

For more details about this annex : see Official Journal of the European Patent Office, No. 12/82

20